# EUROPÄISCHE PATENTSCHRIFT

(11) **EP 1 012 896 B1**
(45) Veröffentlichungstag und Bekanntmachung des Hinweises auf die Patenterteilung: **17.10.2001**
(21) Anmeldenummer: 98948752.5
(22) Anmeldetag: 10.08.1998
(51) Int. Cl.: H01M 8/00

(54) **BRENNSTOFFZELLE ZUR DIREKTEN VERSTROMUNG VON METHANOL**
FUEL CELL WITH DIRECT TRANSFORMATION OF METHANOL INTO CURRENT
PILE A COMBUSTIBLE A TRANSFORMATION DIRECTE DU METHANOL EN COURANT

(30) Priorität: 11.08.1997 DE 19734634
(43) Veröffentlichungstag der Anmeldung: 28.06.2000
(73) Patentinhaber: FORSCHUNGSZENTRUM JÜLICH GMBH, 52425 Jülich (DE)
(72) Erfinder: DIVISEK, Jiri, D-52428 Jülich (DE); DOHLE, Hendrik, D-52249 Eschweiler (DE); PEINECKE, Volker, D-73730 Esslingen (DE); OETJEN, Hans-Friedrich, D-52441 Linnich (DE); BUSENBENDER, Ilona, D-65462 Ginsheim-Gustavsburg (DE); SCHMITZ, Heinz, D-52428 Jülich (DE)
(86) Internationale Anmeldenummer: DE9802282
(87) Internationale Veröffentlichungsnummer: WO9908336

(56) Entgegenhaltungen:
- DE-A- 19 646 486
- DE-A- 19 646 487
- DE-B- 1 496 145
- DATABASE WPI Section Ch, Week 9707 Derwent Publications Ltd., London, GB; Class L03, AN 97-074676 XP002900347 & JP 08 321315 A (MITSUBISHI ELECTRIC CORP), 3. Dezember 1996
- CONG PU ET AL.: "A Methanol Impermeable Proton Conducting Composite Electrolyte System" J. ELECTROCHEM. SOC., Bd. 142, Nr. 7, 7. Juli 1995, Seiten l119-l120, XP002900348

## Beschreibung

Die Erfindung betrifft eine Brennstoffzelle.

Eine Brennstoffzelle, z. B. bekannt aus DE 42 41 150 C1, weist eine Kathode, einen Elektrolyten und eine Anode auf. Der Kathode wird ein Oxidationsmittel, z. B. Luft und der Anode wird ein Brennstoff, z. B. Wasserstoff zugeführt. Kathode und Anode einer Brennstoffzelle weisen in der Regel eine durchgehende Porosität auf, damit die beiden Betriebsmittel Oxidationsmittel und Brennstoff den aktiven Bereichen der Elektroden zugeführt und das Produktwasser abgeführt werden können.

Es gibt sogenannte PEM-Brennstoffzellen, bei denen protonenleitende Membranen als Elektrolyt eingesetzt werden. Die Betriebstemperaturen liegen unterhalb von 130 °C, um die üblicherweise eingesetzte Nafionmembran nicht zu zerstören.

An der Anode einer PEM-Brennstoffzelle bilden sich in Anwesenheit des Brennstoffs mittels eines Katalysators Wasserstoffionen (Protonen). Die Wasserstoffionen passieren den Elektrolyten und verbinden sich auf der Kathodenseite mit dem vom Oxidationsmittel stammenden Sauerstoff zu Wasser. Elektronen werden dabei freigesetzt und so elektrische Energie erzeugt.

Weist eine Brennstoffzelle einen alkalischen Elektrolyten auf, so wird das Oxidationsmittel in OH⁻ umgewandelt. OH⁻-Ionen passieren dann den Elektrolyten und verbinden sich anschließend mit zugeführtem Wasserstoff zu Wasser. Dabei wird der Wasserstoff ebenfalls oxidiert. Als Katalysator ist dann regelmäßig Nickel vorgesehen. Es wird dabei elektrische Energie freigesetzt.

Es ist aus DE 195 43 759 bekannt, Brennstoffe wie Methan oder Methanol zunächst extern (d. h. außerhalb der Brennstoffzelle mittels eines Reformierreaktors) oder intern an der Anode der Brennstoffzelle zu reformieren. Durch die Reformierung entsteht der für die Brennstoffzelle benötigte Wasserstoff.

Die externe Reformierungsreaktion wird beispielsweise durch Kupfer/Zinklegierungen bewirkt.

Nachteilhaft ist der apparative sowie der regelungstechnische Aufwand bei der externen Reformierung sehr hoch. Auch vermag ein externer Reformer keinen reinen Wasserstoff zu produzieren. Eine aufwendige Wasserstoffreinigung ist erforderlich. Die für die endotherme Reformierungsreaktion benötigte Energie muß separat bereitgestellt werden. Das System weist eine große Trägheit auf und ist daher für einen dynamischen oder intermittierenden Betrieb ungeeignet.

Die aus DE 195 43 759 bekannte interne Reformierung, wird unmittelbar in der Brennstoffzelle durchgeführt.

Nachteilhaft ist diese nur bei sehr hohen Betriebstemperaturen möglich.

Bei der sogenannten Direkt-Methanol-Brennstoffzelle, z. B. bekannt aus EP 0 068 508 B1, wird Methanol elektrochemisch unmittelbar an der Anode zu Protonen und CO₂ oxidiert. Betriebstemperaturen unterhalb von 130 °C sind möglich.

Bei Betriebstemperaturen unterhalb von 130 °C läuft die Methanoloxidation nachteilhaft nur sehr langsam ab. Schlechte Wirkungsgrade sind die Folge. Methanol kann ferner durch die üblicherweise verwendeten Elektrolytpolymere (z. B. Nafion) hindurchtreten. Das hindurchgetretene Methanol trägt nicht mehr zur Energieerzeugung bei. Die Kathodenreaktion, nämlich die Sauerstoffreduktion wird ferner durch das hindurchgetretene Methanol gehemmt. Leistungsverluste treten auf.

Auch ist bei der Direkt-Methanol-Brennstoffzelle darauf zu achten, daß der Elektrolyt nicht mit Methanol chemisch reagiert. Aus diesem Grunde scheidet beispielsweise Phosphorsäure als Elektrolytmaterial aus.

Eine Kupfer/Zinklegierung kann bei der Direkt-Methanol-Brennstoffzelle regelmäßig nicht eingesetzt werden, da diese elektrochemisch nicht aktiv ist und sich diese regelmäßig nicht mit dem Material des Elektrolyten verträgt.

Aufgabe der Erfindung ist die Schaffung einer Brennstoffzelle, bei der eine Reformierung des Brennstoffs unmittelbar an der Anode der Brennstoffzelle in gegenüber dem vorgenannten Stand der Technik verbesserter Weise durchgeführt werden kann.

Die Aufgabe der Erfindung wird durch die anspruchsgemäße Brennstoffzelle gelöst. Vorteilhafte Ausgestaltungen ergeben sich aus den Unteransprüchen.

Auf der Anodenseite der Brennstoffzelle befindet sich eine Sperrschicht. Die Sperrschicht trennt mit Ausnahme von Wasserstoff die Brennstoffe vom Elektrolyten. Sie ist (praktisch) undurchlässig für Brennstoffe wie Methanol. Die Sperrschicht ist durchlässig für atomaren oder molekularen Wasserstoff.

Die Sperrschicht besteht z. B. aus einem elektronisch leitfähigen Hydridbildner und zwar insbesondere aus einem metallischen Hydridbildner. Palladium oder Palladium/Silberlegierungen stellen geeignete metallische Hydridbildner dar, um zu einer Sperrschicht im Sinne des Anspruchs zu gelangen.

Es ist ferner ein Katalysator vorgesehen, der den durch die Sperrschicht hindurchtretenden Wasserstoff oxidiert. Im Fall einer protonendurchlässigen Membran wird der Wasserstoff zu Protonen oxidiert. Im Fall eines alkalischen Elektrolyten wird der Wasserstoff oxidiert und verbindet sich mit OH⁻-Ionen zu Wasser. Weist die Anode beispielsweise ein Edelmetall wie Platin oder eine Edelmetallegierung auf und ist der Elektrolyt protonenleitend, so wird der Wasserstoff mittels Katalyse zu Protonen oxidiert. Die Anode stellt hier folglich zugleich einen Katalysator dar, der den durch die Sperrschicht hindurchtretenden Wasserstoff zu Protonen oxidiert.

Brennstoffe wie Methanol sind bei der anspruchsgemäßen Vorrichtung von der Elektrolytschicht getrennt. Die bei der Direkt-Methanol-Brennstoffzelle genannten Leistungsverluste (verursacht durch Brennstoffverluste und die gehemmte Kathodenreaktion) werden daher vermieden. Chemische Reaktionen zwischen dem Brennstoff und dem Elektrolytmaterial werden verhindert. Die Elektrolytschicht kann folglich im Unterschied zur Direkt-Methanol-Brennstoffzelle aus den üblichen Feststoffen wie Nafion oder Flüssigkeiten wie Phosphorsäure bestehen. Die Elektrolytschicht kann ferner alkalisch sein.

In einer weiteren Ausführungsform der Erfindung ist die Sperrschicht elektrisch leitfähig. Sie kann so Anodenfunktionen übernehmen.

An die Sperrschicht grenzt vorzugsweise unmittelbar ein Mittel zur Reformierung des Brennstoffes. Dieses kann als entsprechend katalytisch aktive Schicht ausgestaltet sein, die auf der Sperrschicht aufgebracht ist. Diese Schicht kann z. B. auf einem hochporösen Hydridbildner aufgebracht sein, so daß die Porenwände mit Reformierkatalysator beschichtet sind. Durch die räumlich enge Verbindung zum Hydridbildner wird Wasserstoff unmittelbar der Reaktionszone entzogen. Hierdurch wird die Reformierungsreaktion beschleunigt.

Die katalytisch aktive Schicht wird im folgenden reformierende Schicht genannt. Die reformierende Schicht kann aus einer Kupfer/Zinklegierung, Platin oder einer Platin/Rutheniumlegierung bestehen. Pt oder Pt/Ru stellen dann einen Katalysator für die chemische Reaktion dar.

Die reformierende Schicht ist möglichst dünn auf ihrem Trägermaterial (das zugleich Sperrschichtmaterial sein sollte) aufgebracht, damit der Wasserstoff schnellstmöglich hindurch zum Sperrschichtmaterial diffundieren kann.

Der durch die Reformierung entstehende Wasserstoff entweicht durch die Sperrschicht. Er wird sozusagen "abgesaugt". Da sich folglich kein Reaktionsgleichgewicht der Reformierungsreaktion einstellen kann, wird die Reformierungsreaktion in Richtung der Produkte beschleunigt. Der Wirkungsgrad wird so verbessert. Die Reaktionstemperatur kann abgesenkt werden.

Der Beschleunigungseffekt bezüglich der Reformierung und die damit einhergehende Temperaturabsenkung ist maximal, wenn die Sperrschicht zugleich die Anode ist und der Katalysator für die Reformierungsreaktion unmittelbar auf der Sperrschicht aufgebracht ist.

Vorteilhaft weist die Sperrschicht ein hohes Lösungsvermögen für Wasserstoff auf. Der bei der Reformierung entstehende Wasserstoff wird so besonders schnell abgezogen. Palladiumlegierungen, z. B. Pd-Ag-Legierungen, insbesondere die mit einem Atomverhältnis Pd:Ag = 75:25, weisen ein hohes Lösungsvermögen für Wasserstoff im Sinne der Erfindung auf.

Vorteilhaft weist die Sperrschicht aufgerauhte Oberflächen auf. Durch eine hohe Rauhigkeit wird zum einen auf der Seite der Reformierschicht die wirksame Oberfläche für die Reformierungsreaktion vergrößert. Zum anderen wird auf der Seite des Elektrolyten das Desorptionsvermögen und die Oxidation des gelösten Wasserstoffs verbessert. Zudem wird durch die Rauhigkeit die Haftung sowohl eines ionenleitenden Polymers als auch der äußeren reformierenden Schicht verbessert.

Die Rauhigkeit kann z.B. durch elektrochemische Abscheidung von Palladium auf eine dünne Pd-Ag-Folie erreicht werden.

Die reformierende Schicht ist regelmäßig porös, um die katalytisch aktive Oberfläche zu vergrößern. Auch gelangt der entstehende Wasserstoff durch die Poren hindurch zur bzw. in die Sperrschicht.

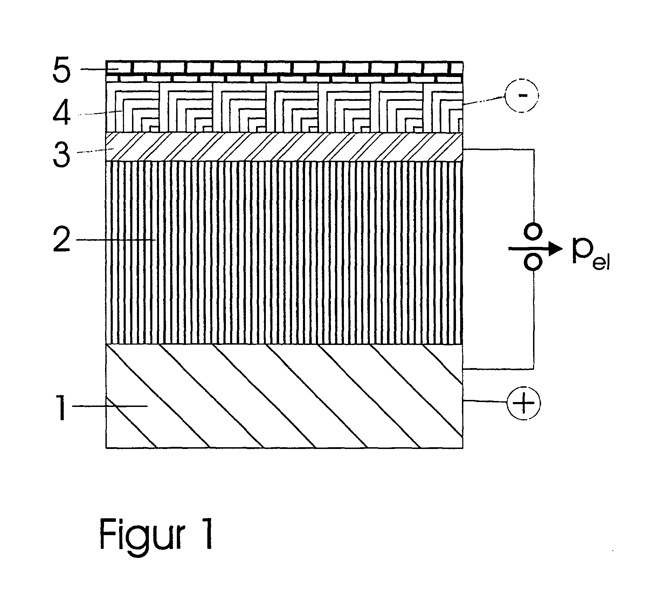

Figur 1 verdeutlicht den Aufbau der erfindungsgemäßen Brennstoffzelle. Diese besteht aus einem Schichtsystem mit einer porösen Kathodenschicht 1, einer protonenleitenden Elektrolytschicht 2, einer Anode 3, einer Sperrschicht 4 und einer reformierenden Schicht 5. Die Anode stellt hier zugleich den anspruchsgemäßen Katalysator dar, der den durch die Sperrschicht hindurchtretenden Wasserstoff zu Protonen oxidiert.

CH₃OH gelangt zusammen mit H₂O zur reformierenden Schicht 5. Die Reformierungsreaktion findet daraufhin an der reformierenden Schicht 5 statt. Der resultierende Wasserstoff passiert die reformierende Schicht 5 und diffundiert durch die Sperrschicht 4 hindurch zur Anode 3. Als Abfallprodukt entsteht dabei CO₂. Dieses entweicht. An der Anode 3 wird der Wasserstoff zu Protonen oxidiert. Die Protonen passieren die Elektrolytschicht 2 und gelangen so zur Kathode 1. Sauerstoff wird der Kathode 1 zugeführt und verbindet sich mit den Protonen zu Wasser. Ein elektrischer Strom wird so erzeugt.

## Patentansprüche

1. Brennstoffzelle, bestehend aus Anode, Elektrolyt, Kathode sowie aus einer Sperrschicht, mit den Merkmalen:
a) die Sperrschicht befindet sich auf der Anodenseite der Brennstoffzelle,
b) die Sperrschicht trennt Brennstoffe vom Elektrolyten,
c) die Sperrschicht ist durchlässig für atomaren oder molekularen Wasserstoff,
d) die Sperrschicht weist nur auf der vom Elektrolyten abgewandten Seite einen Reformierungskatalysator zur Reformierung des Brennstoffs aus der Gruppe Kupfer/Zinklegierung, Platin oder Platin/Rutheniumlegierung auf.

2. Brennstoffzelle nach vorhergehendem Anspruch,
**dadurch gekennzeichnet,**
**daß** die Sperrschicht zugleich die Anode ist.

3. Verwendung der Brennstoffzelle nach einem der vorhergehenden Ansprüche zur Verstromung von Methanol.

## Claims

1. Fuel cell comprising anode, electrolyte and cathode together with a barrier layer, with the features:
a) the barrier layer is on the anode side of the fuel cell,
b) the barrier layer separates fuels from the electrolyte,
c) the barrier layer is permeable to atomic or molecular hydrogen,
d) the barrier layer has, only on the side facing away from the electrolyte, a reforming catalyst from the group of copper/zinc alloy, platinum or platinum/ruthenium alloy for reforming the fuel.

2. Fuel cell according to the preceding claim, **characterised in that** the barrier layer is also the anode.

3. Application of the fuel cell according to one of the preceding claims for direct transformation of methanol into current.

## Revendications

1. Pile à combustible constituée d'une anode, d'un électrolyte, d'une cathode, ainsi que d'une couche d'arrêt ayant les caractéristiques :
a) la couche d'arrêt se trouve du côté anodique de la pile à combustible,
b) la couche d'arrêt sépare des combustibles de l'électrolyte,
c) la couche d'arrêt est perméable à de l'hydrogène atomique ou moléculaire,
d) la couche d'arrêt ne comporte que sur le côté éloigné de l'électrolyte un catalyseur de reformage du combustible, choisi dans le groupe d'un alliage de cuivre et de zinc, du platine ou d'un alliage du platine et du ruthénium.

2. Pile à combustible suivant la revendication précédente, **caractérisée en ce que** la couche d'arrêt est en même temps l'anode.

3. Utilisation de la pile à combustible suivant l'une des revendications précédentes, pour transformer du méthanol en courant électrique.
